# EUROPÄISCHE PATENTSCHRIFT

(11) **EP 3 361 223 B1**
(45) Veröffentlichungstag und Bekanntmachung des Hinweises auf die Patenterteilung: **23.10.2019**
(21) Anmeldenummer: 18153337.3
(22) Anmeldetag: 25.01.2018
(51) Int. Cl.: G01F 23/284, H01Q 1/22, H01Q 1/36, H01Q 9/04, G01S 7/41, G01S 13/04, G01S 13/88

(54) **FÜLLSTANDSSCHALTER UND VERFAHREN ZUR BESTIMMUNG DES GRENZSTANDES EINES MEDIUMS IN EINEM BEHÄLTER**
FILL LEVEL SWITCH AND METHOD FOR DETECTING A FILL LEVEL OF A MEDIUM IN A CONTAINER
COMMUTATEUR DE NIVEAU DE REMPLISSAGE ET PROCÉDÉ DE DÉTECTION D'UN NIVEAU LIMITE DE FLUIDE DANS UNS UN RÉCIPIENT

(30) Priorität: 09.02.2017 DE 102017102587
(43) Veröffentlichungstag der Anmeldung: 15.08.2018
(73) Patentinhaber: Krohne Messtechnik GmbH, 47058 Duisburg (DE)
(72) Erfinder: CONVENT, Thomas, 47661 Issum (DE); STORCH, Robert, 58511 Lüdenscheid (DE)
(74) Vertreter: Gesthuysen Patent- und Rechtsanwälte

(56) Entgegenhaltungen:
- DE-A1-102008 016 829
- DE-T2- 60 320 450
- US-A1- 2013 207 274

## Beschreibung

Die Erfindung geht aus von einem Füllstandsschalter zur Bestimmung eines Grenzstandes eines Mediums in einem Behälter mit wenigstens einer Sensoreinheit, wobei die Sensoreinheit wenigstens eine Antenneneinheit, wenigstens ein Prozessfenster zum Schutz der Sensoreinheit und zur Anbindung an die Behälterwand, wenigstens eine Elektronikeinheit und wenigstens ein Sensorgehäuse aufweist, wobei die Antenneneinheit wenigstens ein erstes Abstrahlelement zur Aussendung eines ersten elektromagnetischen Sendesignals, wenigstens eine Speiseleitung, wenigstens eine ein Referenzpotenial aufweisende Referenzfläche, vorzugsweise eine definierte Massefläche und wenigstens eine dielektrische Schicht aufweist, wobei die dielektrische Schicht zwischen der Referenzfläche und dem Abstrahlelement angeordnet ist.

Zudem geht die Erfindung aus von einem Verfahren zur Bestimmung eines Grenzstandes eines Mediums in einem Behälter mit einem Füllstandsschalter mit wenigstens einer Sensoreinheit, wobei die Sensoreinheit wenigstens eine Antenneneinheit, wenigstens ein Prozessfenster zum Schutz der Sensoreinheit und zur Anbindung an die Behälterwand, wenigstens eine Elektronikeinheit und wenigstens ein Sensorgehäuse aufweist, wobei die Antenneneinheit wenigstens ein erstes Abstrahlelement zur Aussendung eines ersten elektromagnetischen Sendesignals, wenigstens eine Speiseleitung und wenigstens eine ein Referenzpotenial aufweisende Referenzfläche, vorzugsweise eine definierte Massefläche und wenigstens eine dielektrische Schicht aufweist, wobei die dielektrische Schicht zwischen der Referenzfläche und dem Abstrahlelement angeordnet ist.

Aus dem Stand der Technik ist es bekannt, zur Erfassung eines Grenzstandes eines Mediums in einem Behälter, beispielsweise zur Überlauf- oder Trockenlaufsicherung unterschiedliche Sensoren einzusetzen. Lediglich beispielhaft seien hier genannt Schwinggabelsensoren, kapazitive Sensoren, konduktive Sensoren oder Ultraschallsensoren.

Bekannt sind ebenfalls Sensoren, die den Grenzstand eines Mediums durch Wechselwirkung des Mediums mit einem elektromagnetischen Signal bestimmen. Zum einen sind Schrankensensoren bekannt, die ein Abstrahlelement aufweisen, wobei das Abstrahlelement ein elektromagnetisches Signal durch den Behälter bzw. durch das Medium in Richtung eines Empfängers aussendet und wobei die Anwesenheit des Mediums bzw. das Erreichen des Grenzstandes durch die Dämpfung des elektromagnetischen Signals bestimmt wird.

Weiterhin kann auch die Veränderung des Nahfeldes des Sensors auf Grund des Vorhandenseins eines Mediums mit einem Reflexionssensor bestimmt werden. Dazu wird in das Abstrahlelement vorzugsweise für einen definierten Zeitraum ein elektromagnetisches Signal eingespeist, welches von dem Abstrahlelement in den Behälter ausgesendet wird, wobei die an dem Abstrahlelement reflektierte Leistung entweder auf einer definierten Frequenz oder in einem Frequenzintervall bestimmt wird. Mit Hilfe eines Richtkopplers wird dazu das einzuspeisende Signal von dem zurück laufenden Reflexionssignal getrennt. Die Anwesenheit eines Mediums bewirkt auf Grund der Änderung der Dielektrizitätszahl eine veränderte reflektierte Leistung über der Frequenz. Insofern kann mit diesem Verfahren sowohl das Erreichen eines oberen Grenzstandes, also der Übergang von Luft zu Medium, als auch das Erreichen eines unteren Grenzstandes, also der Übergang von Medium zu Luft, überwacht werden. Die Auswertung der reflektierten Leistung in einem Frequenzintervall bietet den Vorteil, dass auch zwischen Medien unterschiedlicher Dielektrizitätszahl besonders einfach und sicher unterschieden werden kann.

Dabei sind sowohl Schranken- als auch Reflexionssensoren im Betrieb durch ein Prozessfenster von dem Behälterinnenraum getrennt. Ein solches Prozessfenster erfüllt insbesondere folgende Aufgaben und Anforderungen:
- Das Prozessfenster ist aus einem für die Frequenz des elektromagnetischen Sendesignals transparenten Material hergestellt.
- Das Prozessfenster weist eine möglichst niedrige Dielektrizitätszahl auf, um die Signaldämpfung gering und damit die Sensitivität groß zu halten.
- Das Prozessfenster ist möglichst dünn, um die Signaldämpfung gering und damit die Sensitivität groß zu halten.

Aus der Druckschrift EP 3 0455 879 A1 ist ein Füllstandsschalter mit einer auf einem Trägerelement angeordneten Signalleiteranordnung bekannt, wobei die Signalleiteranordnung mehrere Abstrahlvorrichtungen, beispielsweise in Form von Patchantennen, zum Abstrahlen von elektromagnetischen Signalen aufweist. Das Erreichen eines Grenzstandes wird durch die Auswertung des Abstrahlverhaltens der Abstrahlvorrichtungen bestimmt. Dabei können die Abstrahlelemente im Betrieb entweder unmittelbaren oder mittelbaren Kontakt mit dem Medium aufweisen.

Der Einsatz von planaren Abstrahlelementen, an denen das von der Elektronikeinheit erzeugte elektromagnetische Sendesignal in den Freiraum, also in den Behälterinnenraum, abgestrahlt wird, weist im Rahmen der Füllstandsbestimmung den Vorteil auf, dass entsprechende Antennenanordnungen besonders einfach herzustellen und darüber hinaus besonders platzsparend ausgestaltet sind und damit kaum in das zu messende Medium hineinragen.

Aus dem Stand der Technik sind verschiedene Ausgestaltungen von planaren Antennenanordnungen bekannt. In der Regel besteht eine solche Antennenanordnung aus einer runden oder rechteckigen Antennenfläche, die mit einer Massefläche hinterlegt ist, wobei sowohl die Antennenfläche und die Massefläche als auch die Massefläche und die Speiseleitung durch eine dielektrische Schicht voneinander getrennt sind.

Die Speisung der Antennenfläche kann entweder durch einen unmittelbaren Kontakt über eine Leitung mit der Speiseleitung erfolgen, alternativ ist ebenfalls eine sogenannte Aperturkopplung bekannt. Dabei ist die Speiseleitung nicht direkt mit der Antennenfläche verbunden, sondern die Signalenergie wird durch eine Öffnung in der Massefläche elektromagnetisch in die Antennenfläche eingekoppelt. Üblicherweise werden solche Antennenanordnungen in mehrlagigen Leiterkartenaufbauten realisiert.

Aus der Druckschrift DE 10 2005 010 895 A1 ist beispielsweise eine aperturgekoppelte Antennenanordnung bekannt, wobei die Massefläche zur Erzeugung einer zirkularen Polarisation mit hoher Polarisationsreinheit und einer hohen Impedanzbandbreite eine Kombination von drei Schlitzen aufweist.

Die Druckschrift DE 10 2005 048 274 A1 offenbart eine RADAR-Sensoranordnung insbesondere für den Einsatz in Fahrzeugen, wobei auf der Oberseite des Sensors ein Patch-Antennenarray angeordnet ist, das über eine Strahlungskopplung gespeist wird.

Zudem ist aus der DE 10 2004 057 087 B3 eine in der Wandung einer Rohrleitung angeordnete Antennenanordnung zur Messung eines Massestroms bekannt, wobei die Antennenanordnung als Sende- und als Empfangselement diametral angeordnete, gekrümmte Patch-Elemente aufweist und wobei die Mikrowellenein- und -auskopplung über ein Koppelloch erfolgt. Dabei sind die Patchelemente in die Rohrinnenwand integriert und weisen im Betrieb insofern keinen direkten Kontakt zum Medium auf.

Als Grenzstandschalter einsetzbare Streifenleiterantennen (Patch-Antennen) sind aus DE 10 2008 016 829 A1 und DE 603 20 450 T2 bekannt.

Ausgehend von dem dargelegten Stand der Technik ist es Aufgabe der vorliegenden Erfindung einen Füllstandsschalter anzugeben, der eine besonders hohe Sensitivität aufweist und gleichzeitig besonders robust ist. Darüber hinaus ist es Aufgabe der Erfindung ein entsprechendes Verfahren zur Bestimmung eines Grenzstandes eines Mediums in einem Behälter anzugeben.

Gemäß einer ersten Lehre der Erfindung wird die zuvor hergeleitete Aufgabe durch einen eingangs genannten Füllstandsschalter dadurch gelöst, dass die Antenneneinheit derart ausgestaltet ist, dass das Abstrahlelement im Betrieb von der Speiseleitung über eine Aperturkopplung gespeist wird, wobei die Referenzfläche wenigstens eine Öffnung als Durchlass für das elektromagnetische Signal aufweist und dass das erste Abstrahlelement derart angeordnet ist, dass es im Betrieb unmittelbaren Kontakt mit dem Medium aufweist.

Im Rahmen der vorliegenden Erfindung ist das in den Behälter eingekoppelte elektromagnetische Signal vorzugsweise ein Mikrowellensignal.

Erfindungsgemäß wurde erkannt, dass eine Anordnung des ersten Abstrahlelementes derart, dass es im Betrieb beispielsweise bei Erreichen des zu überwachenden Grenzstandes unmittelbaren Kontakt mit dem Medium aufweist, sodass das von dem Abstrahlelement ausgesendete Signal besonders tief in das Medium eindringen kann, eine besonders hohe Sensitivität des Füllstandsschalters bewirkt, wodurch die Detektion von Medien mit besonders niedriger Dielektrizitätszahl möglich ist. Wird die von dem Abstrahlelement reflektierte Leistung über der Frequenz ausgewertet, so ist die gemessene Frequenzverschiebung für ein Medium mit einer bestimmten Dielektrizitätskonstante deutlicher größer gegenüber einer Frequenzverschiebung, die mit einer Anordnung gemessen wurde, bei der das Abstrahlelement mediumseitig betrachtet hinter dem Prozessfenster angeordnet ist. Die Dicke des Prozessfensters hat in der erfindungsgemäßen Ausgestaltung zwar immer noch Einfluss auf die Messung, verhält sich aber nicht länger reziprok zur Sensitivität. Somit kann das Prozessfenster im Vergleich zu den aus dem Stand der Technik bekannten Anordnungen besonders dick ausgestaltet sein. Damit kann gleichzeitig eine besonders hohe Druckfestigkeit sowie eine besonders hohe Beständigkeit des Füllstandsschalters gegenüber chemisch diffusionsfreudigen Medien gewährleistet werden.

Die Verwendung einer Aperturkopplung ist in vorliegender Anwendung in verschiedener Hinsicht vorteilhaft. Beispielsweise kann eine entsprechende Antennenanordnung besonders einfach hergestellt werden, da auf eine Durchkontaktierung zum Abstrahlelement, beispielsweise zur Antennenfläche, verzichtet werden kann.

Gemäß einer Ausgestaltung ist auch zwischen der Speiseleitung und der Referenzfläche eine dielektrische Schicht vorhanden.

Gemäß einer vorteilhaften Ausgestaltung des erfindungsgemäßen Füllstandsschalters ist das Abstrahlelement als planare Antennenfläche oder als Array aus wenigstens zwei planaren Antennenflächen ausgestaltet.

Zudem ist es vorteilhaft, wenn die zwischen der Referenzfläche und dem Abstrahlelement angeordnete dielektrische Schicht als Prozessfenster ausgestaltet ist. Besonders einfach kann das Abstrahlelement durch Beschichtung auf das Prozessfenster oder, wenn das Prozessfenster aus einem Kunststoff, wie beispielsweise PEEK oder PTFE besteht, durch Übergießen im Herstellungsprozess des Prozessfensters aufgebracht werden.

Dabei ist das Prozessfenster vorzugsweise derart ausgestaltet, dass es durchlässig ist für die Frequenz des elektromagnetischen Sendesignals, und/oder dass das Prozessfenster zumindest teilweise aus Kunststoff, Glas oder Keramik, besonders bevorzugt aus PEEK oder PTFE, besteht.

Elektromagnetisch ist die Aperturkopplung nicht auf sehr dünne Masseflächen, wie sie im Falle eines Leiterkartenaufbaus vorliegen, beschränkt. Gemäß einer weiteren Ausgestaltung ist daher ein Teil des Sensorgehäuses als Referenzfläche ausgestaltet, wobei das Sensorgehäuse im Bereich der Referenzfläche wenigstens eine Öffnung als Durchlass für das elektromagnetische Signal aufweist. Vorzugsweise ist das Sensorgehäuse gemäß dieser Ausgestaltung zumindest teilweise aus Metall. Dabei muss das Sensorgehäuse nicht ein definiertes Massepotential aufweisen, sondern es kann ebenfalls ein unbestimmtes Referenzpotential aufweisen. Diese Ausgestaltung weist den Vorteil auf, dass sie bei hohen Druckbelastungen besonders beständig ist.

Gemäß einer nächsten Ausgestaltung kann das Sensorgehäuse ein definiertes Massepotential aufweisen.

Gemäß einer weiteren vorteilhaften Ausgestaltung weist die Antenneneinheit wenigstens ein zweites Abstrahlelement, vorzugsweise eine zweite planare Antennenfläche, zur Aussendung eines zweiten elektromagnetischen Sendesignals auf, wobei das erste und das zweite Abstrahlelement nicht in einer Ebene angeordnet sind. Dabei meint die Angabe, dass die beiden Abstrahlelemente nicht in einer Ebene angeordnet sind, dass sie im Betrieb einen unterschiedlichen Abstand zum Medium aufweisen. Besonders bevorzugt ist das erste Abstrahlelement mediumseitig gesehen vor dem Prozessfenster angeordnet und das zweite Abstrahlelement ist hinter dem Prozessfenster angeordnet.

Vorzugsweise ist das zweite Abstrahlelement parallel zum ersten Abstrahlelement angeordnet. Eine parallele Anordnung im vorliegenden Zusammenhang bedeutet, dass die beiden Abstrahlelemente mediumseitig betrachtet hintereinander angeordnet sind.

Besonders bevorzugt ist das zweite Abstrahlelement zwischen dem Prozessfenster und der Referenzfläche angeordnet. Gemäß dieser Ausgestaltung wird ein zweites Abstrahlelement hinter dem Prozessfenster bereitgestellt, das eine im Vergleich zu dem ersten Abstrahlelement geringere Sensitivität aufweist. Diese Ausgestaltung weist den Vorteil auf, dass neben Medien mit niedrigen Dielektrizitätszahlen auch Medien mit stark unterschiedlichen, d.h. kleinen und großen Dielektrizitätszahlen bestimmt werden können. Zudem können auch stark anhaftende Medien überwacht werden, wobei zwischen Anhaftung und Bedeckung der Sensoreinheit durch das Medium unterschieden werden soll. Im Gegensatz zu aus dem Stand der Technik bekannten gestapelten Antennenanordnungen wird diese Anordnung vorliegend nicht zur Erhöhung der Bandbreite der Antennenanordnung verwendet, sondern zur Erhöhung des Sensitivitätsbereiches. Dadurch ist die Sensoreinheit bzw. der Füllstandsschalter besonders vielfältig einsetzbar. Demnach sind das erste und das zweite Abstrahlelement derart ausgestaltet, dass der Frequenzunterschied des ersten und des zweiten Sendesignals nur gering ist. Durch den geringen Frequenzunterschied können das erste und das zweite Sendesignal in der Auswertung unterschieden werden.

Gemäß einer weiteren bevorzugten Ausgestaltung weisen das erste Abstrahlelement und das zweite Abstrahlelement unterschiedliche Größen und/oder unterschiedliche Formen auf.

Zum einen kann durch die individuelle Ausgestaltung der Abstrahlemente realisiert werden, dass sich die Frequenzen des ersten und des zweiten Sendesignals geringfügig unterscheiden. Zum anderen sind das erste und das zweite Abstrahlelement vorzugsweise derart ausgestaltet und angeordnet, dass eine komplette Abschattung des ersten, mediumseitig angeordneten Abstrahlelementes durch das zweite Abstrahlelement verhindert wird.

Beispielsweise ist das zweite Abstrahlelement ringförmig ausgestaltet und das erste Abstrahlelement weist eine ausgefüllte Fläche auf. Denkbar ist weiterhin, dass das erste und/oder das zweite Abstrahlelement kreisförmig, rechteckig, quadratisch oder hantelförmig oder in beliebiger Weise mehreckig ausgestaltet ist bzw. sind oder eine unregelmäßige Geometrie aufweist bzw. aufweisen.

Denkbar ist aber ebenfalls, dass die beiden Abstrahlelemente dieselbe Größe und/oder dieselbe Form aufweisen.

Zudem kann auch durch eine Modifikation der Speiseleitung und/oder der Öffnung der Referenzfläche eine Anpassung der beiden Abstrahlelemente vorgenommen werden.

Gemäß einer nächsten Ausgestaltung ist die Öffnung der Referenzfläche schlitzförmig oder hantelförmig oder T-förmig ausgestaltet. Zudem können auch mehrere räumlich getrennte oder miteinander verbundene Öffnungen vorhanden sein. Sind mehrere Öffnungen vorhanden, so können die einzelnen Öffnungen gleich oder unterschiedlich ausgestaltet sein.

Gemäß ist einer weiteren Ausgestaltung ist die Speiseleitung T-förmig oder hantelförmig ausgestaltet. Ist mehr als eine Speiseleitung vorhanden, so können die einzelnen Speiseleitungen gleich oder unterschiedlich ausgestaltet sein.

Zudem ist es weiterhin vorteilhaft, wenn die Antenneneinheit derart ausgestaltet ist, dass sowohl das erste Abstrahlelement als auch das zweite Abstrahlelement durch die Aperturkopplung gespeist werden.

Gemäß einer besonders bevorzugten Ausgestaltung weist die Antenneneinheit folgenden Aufbau auf:
- Platinen-Metallisierung mit Speiseleitung
- Platinen-Substratmaterial
- Platinen-Metallisierung mit Massefläche und Öffnung
- Platinen-Substratmaterial
- Platinen-Metallisierung mit erstem Abstrahlelement in Form eines Patches
- Gehäuse-Prozessfenster (bspw. aus PEEK)
- Metallisierung mit zweitem Abstrahlelement in Form eines Patches

Gemäß einer weiteren Ausgestaltung weist das Sensorgehäuse ein Gewinde zur Anbindung an eine Behälterwand auf.

Die Erfindung betrifft ebenfalls eine Anordnung umfassend einen Behälter zur Aufnahme eines Mediums und einen zuvor beschriebenen Füllstandsschalter, wobei der Füllstandsschalter in der Behälterwand befestigt ist. Der Behälter kann beispielsweise zumindest teilweise aus einem Metall und/oder zumindest teilweise aus einem Kunststoff bestehen.

Gemäß einer Ausgestaltung ist der Füllstandsschalter in die Behälterwand eingeschraubt. Dazu weist das Sensorgehäuse ein Gewinde auf, das in einen Installationsstutzen eingeschraubt ist, wobei das erste Abstrahlelement vorzugsweise bündig mit der inneren Behälterwand abschließt. Daneben ist es ebenfalls denkbar, dass das erste Abstrahlelement vorzugsweise durch verschiedene Einschraubtiefen, in den Behälterinnenraum hineinragt oder in der Behälterwand versenkt ist.

Alternativ kann der Installationsstutzen eine feste Verlängerung aufweisen, so dass die Sensoreinheit beabstandet, insbesondere über eine Länge zwischen 0 und 50 cm, von der Behälterwand angeordnet ist. Dies widerspricht dem oben beschriebenen Messprinzip nicht, so lange gewährleistet ist, dass das Medium den Sensor, im Detail das erste Abstrahlelement, im Betrieb beispielsweise bei Erreichen des Grenzstandes berührt.

Gemäß einer Ausgestaltung der Anordnung ist die Sensoreinheit horizontal ausgerichtet.

Gemäß einer nächsten Ausgestaltung ist die Sensoreinheit vertikal ausgerichtet und am oberen Ende des Behälters angeordnet. In dieser Anordnung dient der Füllstandsschalter als Überlaufschutz.

Gemäß einer nächsten Ausgestaltung ist die Sensoreinheit vertikal ausgerichtet und am unteren Ende des Behälters angeordnet. In dieser Anordnung dient der Füllstandsschalter einer Trockenlaufsicherung.

Gemäß einer zweiten Lehre der Erfindung wird das eingangs dargelegte Problem durch ein eingangs genanntes Verfahren dadurch gelöst, dass die Antenneneinheit derart ausgestaltet ist, dass das Abstrahlelement im Betrieb von der Speiseleitung über eine Aperturkopplung gespeist wird, wobei die Referenzfläche wenigstens eine Öffnung als Durchlass für das elektromagnetische Signal aufweist und wobei das erste Abstrahlelement derart angeordnet ist, dass es im Betrieb unmittelbaren Kontakt mit dem Medium aufweist, und dass das Verfahren die folgenden Schritte umfasst:
- Erzeugen und Einspeisen eines elektromagnetischen Signals über die Aperturkopplung in das Abstrahlement,
- Aussenden eines ersten elektromagnetischen Sendesignals unmittelbar in den Behälter und Messung der an dem Abstrahlelement reflektierten Leistung,
- Auswertung der gemessenen Leistung bei einer Frequenz oder in einem Frequenzintervall.

Das erfindungsgemäße Verfahren weist den Vorteil auf, dass auf Grund der unmittelbaren Einkopplung des ersten Sendesignals in den Behälter der Grenzstand von Medien mit besonders niedrigen Dielektrizititätszahlen überwacht werden kann. Damit ist das erfindungsgemäße Verfahren besonders sensitiv. Darüber hinaus kann das Verfahren auch in den Fällen angewendet werden, in denen an den Füllstandsschalter besonders hohe Anforderungen bezüglich der Druckfestigkeit und der Beständigkeit gegenüber diffusionsfreudigen Medien gestellt werden.

Gemäß einer besonders bevorzugten Ausgestaltung ist der Füllstandsschalter nach einer der zuvor beschriebenen Ausgestaltungen ausgestaltet.

Gemäß einer weiteren vorteilhaften Ausgestaltung ist wenigstens ein zweites Abstrahlelement vorhanden, das über die Aperturkopplung gespeist wird, wobei in einem ersten Schritt das elektromagnetisches Signal erzeugt und über die Aperturkopplung in die Abstrahlelemente eingekoppelt wird, wobei das erste Abstrahlelement ein erstes elektromagnetisches Sendesignal mit einer ersten Frequenz unmittelbar in den Behälter aussendet und das zweite Abstrahlelement zeitgleich ein zweites elektromagnetisches Sendesignal mit einer zweiten Frequenz in den Behälter aussendet, wobei die an dem ersten Abstrahlelement und an dem zweiten Abstrahlelement reflektierten Leistungen gemessen werden und wobei anschließend die gemessenen Leistungen bei zwei definierten Frequenzen oder in einem Frequenzintervall ausgewertet werden.

Im Einzelnen gibt es nun eine Vielzahl von Möglichkeiten den erfindungsgemäßen Füllstandsschalter und das erfindungsgemäße Verfahren auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen
- Fig. 1: ein in die Seitenwand eines Behälters eingebauten Füllstandsschalter aus dem Stand der Technik,
- Fig.2: eine erste Antennenordnung aus dem Stand der Technik,
- Fig. 3: eine zweite Antennenordnung aus dem Stand der Technik,
- Fig. 4: ein erstes Ausführungsbeispiel eines Füllstandsschalters im eingebauten Zustand,
- Fig. 5: ein zweites Ausführungsbeispiel eines Füllstandsschalters im eingebauten Zustand,
- Fig. 6: ein drittes Ausführungsbeispiel eines Füllstandsschalters im eingebauten Zustands
- Fig.7: ein viertes Ausführungsbeispiel eines Füllstandsschalters im eingebauten Zustand,
- Fig. 8a: eine erste Anordnung aus einem ersten Abstrahlelement und einem zweiten Abstrahlelement,
- Fig. 8b: eine zweite Anordnung aus einem ersten Abstrahlelement und einem zweiten Abstrahlelement
- Fig. 9: mögliche Anordnungen des Füllstandsschalters an dem Behälter
- Fig. 10: ein erstes Ausführungsbeispiel eines erfindungsgemäßen Verfahrens,
- Fig. 11: ein zweites Ausführungsbeispiel eines erfindungsgemäßen Verfahrens.

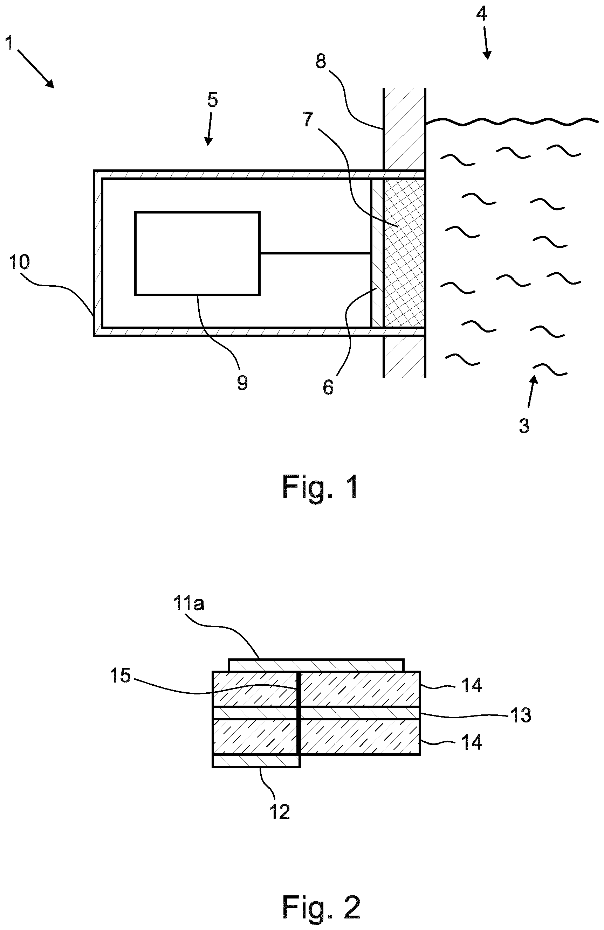

In Fig. 1 ist dargestellt ein Ausführungsbeispiel eines Füllstandsschalters 1 zur Bestimmung eines Grenzstandes eines Mediums 3 in einem Behälter 4 aus dem Stand der Technik. Der Füllstandsschalter 1 weist eine Sensoreinheit 5 auf, wobei die Sensoreinheit 5 eine Antenneneinheit 6, ein Prozessfenster 7 zum Schutz der Sensoreinheit 5 und zur Anbindung an die Behälterwand 8, eine Elektronikeinheit 9 und ein Sensorgehäuse 10 aufweist.

Die Antenneneinheit 6 umfasst ein erstes Abstrahlelement 11a zur Aussendung eines ersten elektromagnetischen Sendesignals. Dabei ist die Antenneneinheit 6 und insbesondere auch das Abstrahlelement 11a mediumseitig gesehen hinter dem Prozessfenster 7 angeordnet.

Die Antenneneinheit 6 weist die in Fig. 2 dargestellte Ausgestaltung auf.

Im Detail ist eine mit der Elektronikeinheit 9 verbundene Speiseleitung 12 und eine ein Referenzpotenial aufweisende Referenzfläche 13 in Form einer definierten Massefläche vorhanden, sowie eine dielektrische Schicht 14 zwischen der Referenzfläche 13 und dem Abstrahlelement 11a und eine dielektrische Schicht 14 zwischen der Speiseleitung 12 und der Referenzfläche 13. Die Einkopplung des elektromagnetischen Signals in das Abstrahlelement 11a erfolgt über eine Leitung 15.

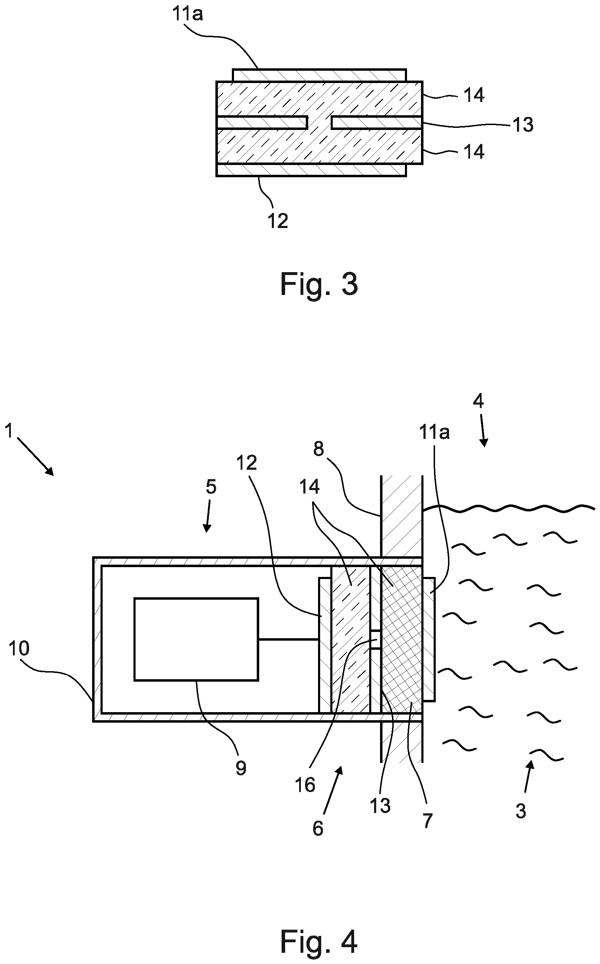

Fig. 4 zeigt ein erstes Ausführungsbeispiel eines Füllstandsschalters 1, wobei der Füllstandsschalter 1 in die Seitenwand 8 eines Behälters 4 eingebaut ist und so das Erreichen eines Grenzstandes des in dem Behälter 4 angeordneten Mediums 3 überwacht.

Dazu weist der Füllstandsschalter 1 eine Sensoreinheit 5 auf, wobei die Sensoreinheit 5 eine Antenneneinheit 6, ein Prozessfenster 7 zum Schutz der Sensoreinheit 5 und zur Anbindung an die Behälterwand 8, eine Elektronikeinheit 9 und ein Sensorgehäuse 10 auf. Die Antenneneinheit 6 ist wie in Fig. 3 dargestellt, ausgestaltet und weist dementsprechend ein Abstrahlelement 11a zur Aussendung eines ersten elektromagnetischen Sendesignals, eine mit der Elektronikeinheit 9 verbundene Speiseleitung 12, eine ein Referenzpotential aufweisende Referenzfläche 13, in Form einer definierte Massefläche, eine dielektrische Schicht 14 zwischen der Referenzfläche 13 und der Speiseleitung 12 und eine dielektrische Schicht 14 zwischen der Referenzfläche 13 und dem Abstrahlelement 11a auf. Das Abstrahlelement 11a wird über eine Aperturkopplung mit dem elektromagnetischen Signal gespeist. Dazu weist die Referenzfläche 13 eine Öffnung 16 als Durchlass für das elektromagnetische Signal auf.

Das Abstrahlelement 11a ist im dargestellten Ausführungsbeispiel derart angeordnet, dass es zumindest bei Erreichen des Grenzstandes unmittelbaren Kontakt mit dem Medium 3 aufweist. Dies hat den Vorteil, dass der Füllstandsschalter 1 eine besonders hohe Sensitivität aufweist. Zudem ist die zwischen dem Abstrahlelement 11a und der Referenzfläche 13 angeordnete dielektrische Schicht 14 als Prozessfenster 7 ausgestaltet.

Das Prozessfenster 7 ist durchlässig für das in das Abstrahlelement 11a einzukoppelnde elektromagnetische Signal. Vorliegend besteht das Prozessfenster 7 aus PEEK. Auf Grund der Aperturkopplung ist es nicht notwendig, dass das Prozessfenster 7 besonders dünn ausgestaltet ist. Damit ist die dargestellte Ausgestaltung auch für Anwendungen geeignet, in denen der Füllstandsschalter 1 hohen Prozessdrücken oder chemisch diffusionsfreudigen Medien ausgesetzt ist.

In der dargestellten Anordnung des in die Seitenwand 8 des Behälters 4 eingebauten Füllstandsschalters 1 ragt das Abstrahlelement 11 geringfügig in den Behälterinnenraum hinein. Der Füllstandsschalter 1 ist in die Seitenwand 8 eingeschraubt. Dazu weist das Sensorgehäuse 10 ein Gewinde auf, das in einen Installationsstutzen eingeschraubt ist.

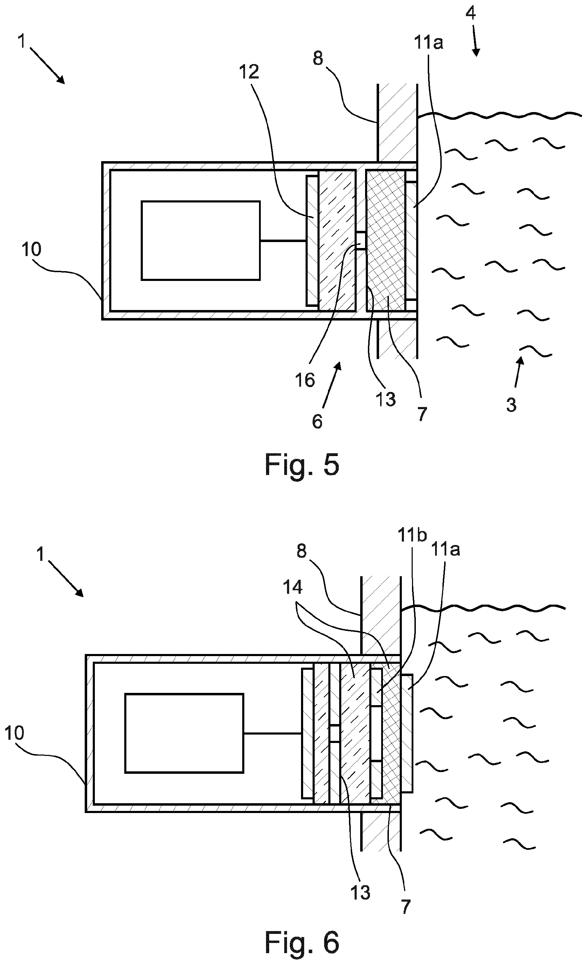

Fig. 5 zeigt ein weiteres Ausführungsbeispiel eines Füllstandsschalters 1, der in die Seitenwand 8 eines Behälters 4 zur Aufnahme eines Mediums 3 ausgestaltet ist. Im Unterschied zu dem in Fig. 4 dargestellten Ausführungsbeispiel ist die Referenzfläche 13 ein Teil des Sensorgehäuses 10. Im Bereich der Referenzfläche 13 weist das Sensorgehäuse 10 daher eine Öffnung 16 als Durchlass für das elektromagnetische Signal auf. Dabei weist das Sensorgehäuse 10 kein definiertes elektrisches Potential auf. Zudem besteht das Sensorgehäuse 10 aus einem Metall. Diese Ausgestaltung des Füllstandsschalters 1 ist besonders geeignet für Anwendungen in denen der Füllstandsschalter 1 hohen Prozessdrücken oder chemisch diffusionsfreudigen Medien ausgesetzt ist, da sowohl das Prozessfenster 7 als auch das Sensorgehäuse 10 die Sensoreinheit 5 schützen.

Zudem ist der Füllstandsschalter 1 derart in die Seitenwand 8 des Behälters 4 eingeschraubt, dass das Abstrahlelement 11a bündig mit der Innenseite der Behälterwand 8 abschließt.

Fig. 6 zeigt ein weiteres Ausführungsbeispiel eines Füllstandsschalters 1, der in der Seitenwand 8 eines Behälters 4 angeordnet ist. Im Unterschied zu den zuvor dargestellten Ausführungsbeispielen ist ein zweites Abstrahlelement 11b vorhanden, das parallel zum ersten Abstrahlelement 11a angeordnet ist. Beide Abstrahlelemente 11a und 11b werden über eine Aperturkopplung gespeist. Das zweite Abstrahlelement 11b ist ringförmig ausgestaltet, das erste Abtrahlelement 11a weist eine ausgefüllte Fläche auf.

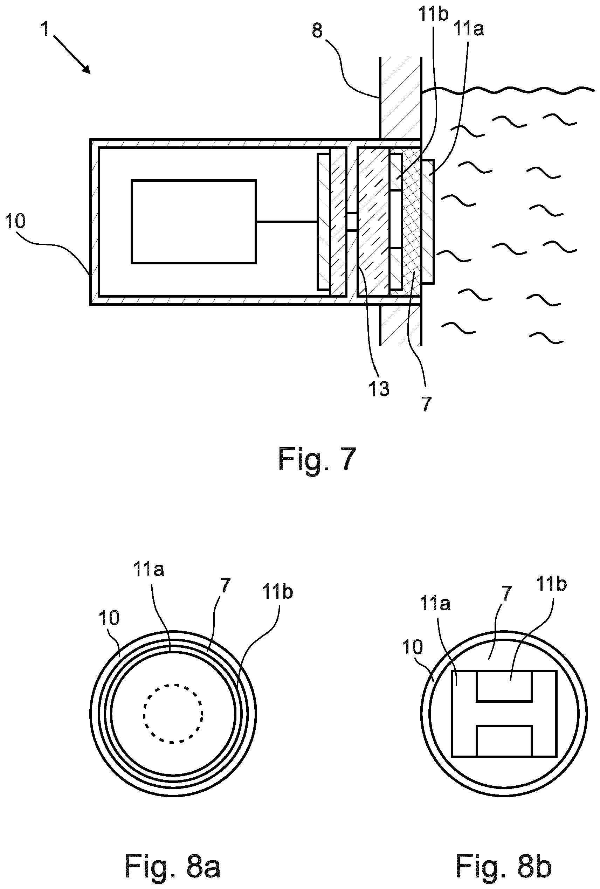

Das in Fig. 7 dargestellte Ausführungsbeispiel entspricht bezüglich der Anordnung der Abstrahlelemente 11a und 11b dem in Fig. 6 dargestellten Ausführungsbeispiel. Zudem ist ein Teil des Sensorgehäuses 10 als Referenzfläche 13 ausgestaltet.

Fig. 8a zeigt eine Anordnung aus einem ersten Abstrahlelement 11a und einem zweiten Abstrahlelement 11b, wobei die Abstrahlelemente 11a und 11b wie in Fig. 7 dargestellt, ausgestaltet sind. Das erste Abstrahlelement 11a ist kreisförmig ausgestaltet und das zweite, hinter dem Prozessfenster 7 angeordnete Abstrahlelement ringförmig.

Fig. 8b zeigt eine alternative Ausgestaltung der Abstrahlelemente 11a und 11b. Das erste Abstrahlelement 11a ist H-förmig ausgestaltet und besitzt in Luft eine Resonanzfrequenz von 5,8 GHz. Das zweite Abstrahlelement 11b ist rechteckförmig ausgestaltet und besitzt in Luft eine Resonanzfrequenz von 8 GHz.

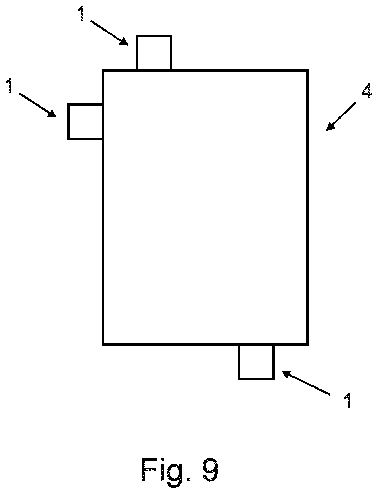

Fig. 9 zeigt mögliche Anordnungen des Füllstandsschalters 1 an dem Behälter 4. Dargestellt ist, dass der Füllstandsschalter 1 sowohl horizontal als auch vertikal am oberen und/oder am unteren Ende des Behälters eingebaut werden kann.

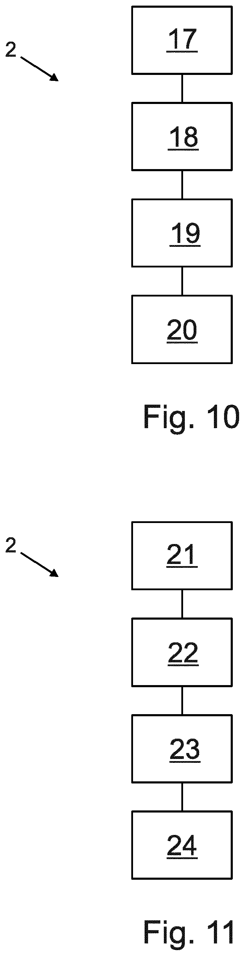

Fig. 10 zeigt ein erstes Ausführungsbeispiel eines erfindungsgemäßen Verfahrens 2 zur Bestimmung eines Grenzstandes eines Mediums 3 in einem Behälter 4 mit einem in Fig. 4 dargestellten Füllstandsschalter 1.

In einem ersten Schritt 17 wird ein elektromagnetisches Signal erzeugt und über die Aperturkopplung in das Abstrahlement 11a eingekoppelt.

In einem zweiten Schritt 18 wird durch das Abstrahlelement 11a das erste elektromagnetische Sendesignal unmittelbar in den Behälter bzw. in das Medium gesendet und die an dem Abstrahlelement 11a reflektierte Leistung wird gemessen.

In einem nächsten Schritt 19 erfolgt die Auswertung der gemessenen Leistung in einem Frequenzintervall.

Der gemessene Wert der reflektierten Leistung bzw. der Verlauf der Leistung über der Frequenz wird in einem weiteren Schritt 20 zur Bestimmung dazu, ob der Grenzstand erreicht ist, mit dem Leistungsverlauf in der Ausgangssituation verglichen. Dabei entspricht die Ausgangssituation bei der Überwachung eines oberen Grenzstandes dem Zustand, das kein Medium am Füllstandsschalter vorhanden ist. Bei der Überwachung eines unteren Grenzstandes entspricht die Ausgangssituation dem Zustand, dass ein Medium am Füllstandsschalter vorhanden ist.

Fig. 11 zeigt ein zweites Ausführungsbeispiel eines Verfahrens 2 zur Bestimmung eines Grenzstandes eines Mediums 3 in einem Behälter 4, wobei der Füllstandsschalter 1 gemäß dem in Fig. 6 dargestellten Ausführungsbeispiel ausgestaltet ist.

In einem ersten Schritt 21 wird ein elektromagnetisches Signal erzeugt und über die Aperturkopplung in die Abstrahlemente 11a und 11b eingekoppelt.

In einem zweiten Schritt 22 sendet das Abstrahlelement 11a ein erstes elektromagnetisches Signal mit einer ersten Frequenz unmittelbar in den Behälter und das zweite Abstrahlelement 11b sendet ein zweites elektromagnetisches Sendesignal mit einer zweiten Frequenz in den Behälter und anschließend werden die an dem ersten Abstrahlelement 11a und an dem zweiten Abstrahlelement 11b reflektierte Leistungen gemessen.

In einem nächsten Schritt 23 erfolgt die Auswertung der Leistung der Reflexionssignale in einem Frequenzintervall.

Die gemessenen Werte der reflektierten Leistung bzw. der Verlauf der Leistungen über der Frequenz wird in einem weiteren Schritt 24 zur Bestimmung, ob der Grenzstand erreicht ist, mit dem entsprechenden Leistungsverlauf in der Ausgangssituation verglichen. Dabei entspricht die Ausgangssituation bei der Überwachung eines oberen Grenzstandes dem Zustand, das kein Medium am Füllstandsschalter vorhanden ist. Bei der Überwachung eines unteren Grenzstandes entspricht die Ausgangssituation dem Zustand, dass ein Medium am Füllstandsschalter vorhanden ist.

Im Ergebnis können mit diesem Verfahren auf Grund der flexiblen Sensitivität sowohl Medien mit niedrigen Dielektrizitätszahlen als auch Medien mit stark unterschiedlichen, d.h. kleinen und großen Dielektrizitätszahlen überwacht werden.

### Bezugszeichen

- 1: Füllstandsschalter
- 2: Verfahren zur Bestimmung eines Grenzstandes
- 3: Medium
- 4: Behälter
- 5: Sensoreinheit
- 6: Antenneneinheit
- 7: Prozessfenster
- 8: Behälterwand
- 9: Elektronikeinheit
- 10: Sensorgehäuse
- 11a: erstes Abstrahlelement
- 11b: zweites Abstrahlelement
- 12: Speiseleitung
- 13: Referenzfläche
- 14: dielektrische Schicht
- 15: Leitung
- 16: Öffnung
- 17: Erzeugen und Einkoppeln eines ersten elektromagnetischen Signals
- 18: Aussenden des ersten elektromagnetischen Signals
- 19: Auswertung
- 20: Bestimmung des Grenzstandes
- 21: Erzeugen und Einkoppeln eines elektromagnetischen Signal in die das erste und das zweite Abstrahlement
- 22: Aussenden des ersten und zweiten elektromagnetischen Signals
- 23: Auswertung
- 24: Bestimmung des Grenzstandes

## Patentansprüche

1. Füllstandsschalter (1) zur Bestimmung eines Grenzstandes eines Mediums (3) in einem Behälter (4) mit wenigstens einer Sensoreinheit (5), wobei die Sensoreinheit (5) wenigstens eine Antenneneinheit (6), wenigstens ein Prozessfenster (7) zum Schutz der Sensoreinheit (5) und zur Anbindung an die Behälterwand (8), wenigstens eine Elektronikeinheit (9) und wenigstens ein Sensorgehäuse (10) aufweist, wobei die Antenneneinheit (6) wenigstens ein erstes Abstrahlelement (11a) zur Aussendung eines ersten elektromagnetischen Sendesignals, wenigstens eine Speiseleitung (12), wenigstens eine ein Referenzpotential aufweisende Referenzfläche (13) und wenigstens eine dielektrische Schicht (14) aufweist, wobei die dielektrische Schicht (14) zwischen der Referenzfläche (13) und dem ersten Abstrahlelement (11a) angeordnet ist,
**dadurch gekennzeichnet,**
**dass** die Antenneneinheit (6) derart ausgestaltet ist, dass das erste Abstrahlelement (11a) im Betrieb von der Speiseleitung (12) über eine Aperturkopplung gespeist wird, wobei die Referenzfläche (13) wenigstens eine Öffnung (16) als Durchlass für das elektromagnetische Signal aufweist und
**dass** das erste Abstrahlelement (11a) derart angeordnet ist, dass es im Betrieb unmittelbaren Kontakt mit dem Medium (3) aufweist.

2. Füllstandsschalter (1) nach Anspruch 1, **dadurch gekennzeichnet, dass** das erste Abstrahlelement (11a) als planare Antennenfläche (11a) oder als Array aus wenigstens zwei planaren Antennenflächen (11a) ausgestaltet ist.

3. Füllstandsschalter (1) nach einem der Ansprüche 1 oder 2, **dadurch gekennzeichnet, dass** die zwischen der Referenzfläche (13) und dem ersten Abstrahlelement (11a) angeordnete dielektrische Schicht (14) als Prozessfenster (7) ausgestaltet ist.

4. Füllstandsschalter (1) nach einem der Ansprüche 1 bis 3, **dadurch gekennzeichnet, dass** das Prozessfenster (7) durchlässig ist für die Frequenz des elektromagnetischen Sendesignals und/oder dass das Prozessfenster (7) zumindest teilweise aus Kunststoff, Glas oder Keramik, besonders bevorzugt aus PEEK oder PTFE, besteht.

5. Füllstandsschalter (1) nach einem der Ansprüche 1 bis 4, **dadurch gekennzeichnet, dass** ein Teil des Sensorgehäuses (10) als Referenzfläche (13) ausgestaltet ist, wobei das Sensorgehäuse (10) im Bereich der Referenzfläche (13) wenigstens eine Öffnung (16) als Durchlass für das elektromagnetische Signal aufweist.

6. Füllstandsschalter (1) nach einem der Ansprüche 1 bis 5, **dadurch gekennzeichnet, dass** das Sensorgehäuse (10) ein definiertes Massepotential aufweist.

7. Füllstandsschalter (1) nach einem der Ansprüche 1 bis 6, **dadurch gekennzeichnet, dass** die Antenneneinheit (6) wenigstens ein zweites Abstrahlelement (11b), vorzugsweise eine zweite planare Antennenfläche (11b), zur Aussendung eines zweiten elektromagnetischen Signals aufweist, wobei das erste und das zweite Abstrahlelement (11a, 11b) nicht in einer Ebene angeordnet sind, sodass das erste und das zweite Abstrahlelement im Betrieb einen unterschiedlichen Abstand zum Medium aufweisen.

8. Füllstandsschalter (1) nach Anspruch 7, **dadurch gekennzeichnet, dass** das zweite Abstrahlelement (11b) parallel zum ersten Abstrahlelement (11a) angeordnet ist, sodass die beiden Abstrahlelemente mediumseitig betrachtet hintereinander angeordnet sind.

9. Füllstandsschalter (1) nach einem der Ansprüche 7 oder 8, **dadurch gekennzeichnet, dass** das zweite Abstrahlelement (11b) zwischen dem Prozessfenster (7) und der Referenzfläche (13) angeordnet ist.

10. Füllstandsschalter (1) nach einem der Ansprüche 7 bis 9, **dadurch gekennzeichnet, dass** das erste Abstrahlelement (11a) und das zweite Abstrahlelement (11b) unterschiedliche Größen und/oder unterschiedliche Formen aufweisen.

11. Füllstandsschalter (1) nach einem der Ansprüche 1 bis 10, **dadurch gekennzeichnet, dass** die Öffnung (16) der Referenzfläche (13) schlitzförmig oder hantelförmig oder T-förmig ausgestaltet ist.

12. Füllstandsschalter (1) nach einem der Ansprüche 7 bis 11, **dadurch gekennzeichnet, dass** die Antenneneinheit (6) derart ausgestaltet ist, dass sowohl das erste Abstrahlelement (11a) als auch das zweite Abstrahlelement (11b) durch die Aperturkopplung gespeist werden.

13. Verfahren (2) zur Bestimmung eines Grenzstandes eines Mediums (3) in einem Behälter (4) mit einem Füllstandsschalter (1) mit wenigstens einer Sensoreinheit (5), wobei die Sensoreinheit (5) wenigstens eine Antenneneinheit (6), wenigstens ein Prozessfenster (7) zum Schutz der Sensoreinheit (5) und zur Anbindung an die Behälterwand (8), wenigstens eine Elektronikeinheit (9) und wenigstens ein Sensorgehäuse (10) aufweist, wobei die Antenneneinheit (6) wenigstens ein erstes Abstrahlelement (11a) zur Aussendung eines ersten elektromagnetischen Sendesignals, wenigstens eine Speiseleitung (12) und wenigstens eine ein Referenzpotential aufweisende Referenzfläche (13) und wenigstens eine dielektrische Schicht (14) aufweist, wobei die dielektrische Schicht (14) zwischen der Referenzfläche (13) und dem ersten Abstrahlelement (11a) angeordnet ist,
**dadurch gekennzeichnet,**
**dass** die Antenneneinheit (6) derart ausgestaltet ist, dass das erste Abstrahlelement (11a) im Betrieb von der Speiseleitung (12) über eine Aperturkopplung gespeist wird, wobei die Referenzfläche (13) wenigstens eine Öffnung (16) als Durchlass für das elektromagnetische Signal aufweist und wobei das erste Abstrahlelement (11a) derart angeordnet ist, dass es im Betrieb unmittelbaren Kontakt mit dem Medium (3) aufweist, und dass das Verfahren (2) die folgenden Schritte umfasst:
- Erzeugen und Einspeisen (17) eines elektromagnetischen Signals über die Aperturkopplung in das erste Abstrahlement (11a),
- Aussenden (18) eines ersten elektromagnetischen Sendesignals unmittelbar in den Behälter und Messung der an dem ersten Abstrahlelement (11a) reflektierten Leistung,
- Auswertung (19) der gemessenen Leistung bei einer Frequenz oder in einem Frequenzintervall.

14. Verfahren (2) nach Anspruch 13, **dadurch gekennzeichnet, dass** der Füllstandsschalter (1) nach einem der Ansprüche 1 bis 12 ausgestaltet ist.

15. Verfahren (2) nach einem der Ansprüche 13 oder 14, **dadurch gekennzeichnet, dass** wenigstens ein zweites Abstrahlelement (11b) vorhanden ist, das über die Aperturkopplung gespeist wird, wobei das erste und das zweite Abstrahlelement einen unterschiedlichen Abstand zum Medium aufweisen, wobei in einem ersten Schritt (21) das elektromagnetische Signal erzeugt und über die Aperturkopplung in die beiden Abstrahlemente (11a, 11b) eingekoppelt wird, wobei das erste Abstrahlelement (11a) ein erstes elektromagnetisches Sendesignal mit einer ersten Frequenz unmittelbar in den Behälter aussendet und das zweite Abstrahlelement (11b) zeitgleich ein zweites elektromagnetisches Sendesignal mit einer zweiten Frequenz in den Behälter (4) aussendet, wobei die an dem ersten Abstrahlelement (11a) und an dem zweiten Abstrahlelement (11b) reflektierten Leistungen gemessen werden und wobei anschließend die gemessenen Leistungen bei zwei definierten Frequenzen oder in einem Frequenzintervall ausgewertet werden.

## Claims

1. Fill level switch (1) for determining a level limit of a medium (3) in a container (4) with at least a sensor unit (5), wherein the sensor unit (5) has at least an antenna unit (6), at least a process window (7) for protecting the sensor unit (5) and for connection to the container wall (8), at least an electronic unit (9) and at least a sensor housing (10), wherein the antenna unit (6) has at least a first emitting element (11a) for emitting a first electromagnetic transmission signal, at least a feed line (12), at least a reference surface (13) having a reference potential and at least a dielectric layer (14), wherein the dielectric layer (14) is arranged between the reference surface (13) and the first emitting element (11a),
**characterized in**
**that** the antenna unit (6) is designed in such a manner that the first emitting element (11a) is fed by the feed line (12) during operation via an aperture coupling, wherein the reference surface (13) has at least an opening (16) as passage for the electromagnetic signal and
**that** the first emitting element (11a) is arranged such that it has direct contact with the medium (3) during operation.

2. Fill level switch (1) according to claim 1, **characterized in that** the first emitting element (11a) is configured as a planar antenna surface (11a) or as an array of at least two planar antenna surfaces (11a).

3. Fill level switch (1) according to one of claims 1 or 2, **characterized in that** the dielectric layer (14) arranged between the reference surface (13) and the first emitting element (11a) is designed as a process window (7).

4. Fill level switch (1) according to any one of claims 1 to 3, **characterized in that** the process window (7) is permeable to the frequency of the electromagnetic transmission signal and/or that the process window (7) consists at least partially of plastic, glass or ceramic, especially preferably of PEEK or PTFE.

5. Fill level switch (1) according to any one of claims 1 to 4, **characterized in that** a part of the sensor housing (10) is configured as a reference surface (13), wherein the sensor housing (10) has at least an opening (16) as a passage for the electromagnetic signal in the region of the reference surface (13).

6. Fill level switch (1) according to one of claims 1 to 5, **characterized in that** the sensor housing (10) has a defined ground potential.

7. Fill level switch (1) according to one of claims 1 to 6, **characterized in that** the antenna unit (6) has at least a second emitting element (11b), preferably a second planar antenna surface (11b), for emitting a second electromagnetic signal, wherein the first and the second emitting element (11a, 11b) are not arranged in a common plane, so that the first and the second emitting element have different distances to the medium during operation.

8. Fill level switch (1) according to claim 7, **characterized in that** the second emitting element (11b) is arranged parallel to the first emitting element (11a), so that, viewed from the medium side, the two emitting elements are arranged behind one another.

9. Fill level switch (1) according to any one of claims 7 or 8, **characterized in that** the second emitting element (11b) is arranged between the process window (7) and the reference surface (13).

10. Fill level switch (1) according to any one of claims 7 to 9, **characterized in that** the first emitting element (11a) and the second emitting element (11b) have different sizes and/or different shapes.

11. Fill level switch (1) according to any one of claims 1 to 10, **characterized in that** the opening (16) of the reference surface (13) is configured slot-shaped or dumbbell-shaped or T-shaped.

12. Fill level switch (1) according to any one of claims 7 to 11, **characterized in that** the antenna unit (6) is designed such that both the first emitting element (11a) and the second emitting element (11b) are fed by the aperture coupling.

13. Method (2) for determining a limit level of a medium (3) in a container (4) with a fill level switch (1) having at least a sensor unit (5), wherein the sensor unit (5) has at least an antenna unit (6), at least a process window (7) for protecting the sensor unit (5) and for connection to the container wall (8), at least an electronic unit (9) and at least a sensor housing (10), wherein the antenna unit (6) has at least a first emitting element (11a) for transmission of a first electromagnetic transmission signal, at least a feed line (12) and at least a reference surface (13) having reference potential and at least a dielectric layer (14), wherein the dielectric layer (14) is arranged between the reference surface (13) and the first emitting element (11a),
**characterized in**
**that** the antenna unit (6) is designed in such a manner that the first emitting element (11a) is fed by the feed line (12) via an aperture coupling, wherein the reference surface (13) has at least an opening (16) as passage for the electromagnetic signal and wherein the first emitting element (11a) is arranged so as to have direct contact with the medium (3) during operation, and that the method (2) comprises the following steps:
- generating and feeding (17) an electromagnetic signal into the first emitting element (11a) via the aperture coupling,
- transmitting (18) a first electromagnetic transmission signal directly into the container and measuring the power reflected at the first emitting element (11a),
- evaluating (19) the measured power at a frequency or in a frequency interval.

14. Method (2) according to claim 13, **characterized in that** the fill level switch (1) is configured according to any one of claims 1 to 12.

15. Method (2) according to any one of claims 13 or 14, **characterized in that** at least a second emitting element (11b) is provided, which is fed via the aperture coupling, wherein the first and the second emitting element have a different distance to the medium, wherein the electromagnetic signal is generated in the first step (21) and coupled into both emitting elements (11a, 11b) via the aperture coupling, wherein the first emitting element (11a) emits a first electromagnetic transmission signal with a first frequency directly into the container and the second emitting element (11b), at the same time, emits a second electromagnetic transmission signal with a second frequency into the container (4), wherein the powers reflected at the first emitting element (11a) and at the second emitting element (11b) are measured and wherein, subsequently, the measured powers are evaluated at two defined frequencies or in a frequency interval.

## Revendications

1. Commutateur de niveau de remplissage (1) destiné à déterminer un niveau limite d'un fluide (3) dans un récipient (4), comportant au moins une unité à capteur (5), dans lequel l'unité à capteur (5) comporte au moins une unité d'antenne (6), au moins une fenêtre de processus (7) pour protéger l'unité à capteur (5) et pour le raccordement à la paroi du récipient (8), au moins une unité électronique (9) et au moins un boîtier de capteur (10), dans lequel l'unité d'antenne (6) comporte au moins un premier élément rayonnant (11a) pour émettre un premier signal d'émission électromagnétique, au moins une ligne d'alimentation (12), au moins une surface de référence (13) présentant un potentiel de référence et au moins une couche diélectrique (14), dans lequel la couche diélectrique (14) est disposée entre la surface de référence (13) et le premier élément rayonnant (11a),
**caractérisé en ce que** l'unité d'antenne (6) est conçue de manière à ce que le premier élément rayonnant (11a) soit alimenté pendant le fonctionnement par la ligne d'alimentation (12) par l'intermédiaire d'un couplage par ouverture, dans lequel la surface de référence (13) comporte au moins une ouverture (16) en tant que passage pour le signal électromagnétique, et **en ce que** le premier élément rayonnant (11a) est disposé de manière à ce qu'il soit en contact direct avec le fluide (3) pendant le fonctionnement.

2. Commutateur de niveau de remplissage (1) selon la revendication 1, **caractérisé en ce que** le premier élément rayonnant (11a) est conçu sous la forme d'une surface d'antenne plane (11a) ou sous la forme d'un réseau d'au moins deux surfaces d'antenne planes (11a).

3. Commutateur de niveau de remplissage (1) selon l'une des revendications 1 ou 2, **caractérisé en ce que** la couche diélectrique (14) disposée entre la surface de référence (13) et le premier élément rayonnant (11a) est conçue sous la forme d'une fenêtre de processus (7) .

4. Commutateur de niveau de remplissage (1) selon l'une des revendications 1 à 3, **caractérisé en ce que** la fenêtre de processus (7) est transparente à la fréquence du signal d'émission électromagnétique et/ou en ce que la fenêtre de processus (7) est constituée au moins partiellement de matière plastique, de verre ou de céramique, de manière particulièrement préférée de PEEK ou de PTFE.

5. Commutateur de niveau de remplissage (1) selon l'une des revendications 1 à 4, **caractérisé en ce qu'**une partie du boîtier de capteur (10) est conçue sous la forme d'une surface de référence (13), dans lequel le boîtier de capteur (10) comporte au moins une ouverture (16) dans la zone de la surface de référence (13) en tant que passage pour le signal électromagnétique.

6. Commutateur de niveau de remplissage (1) selon l'une des revendications 1 à 5, **caractérisé en ce que** le boîtier de capteur (10) présente un potentiel de masse défini.

7. Commutateur de niveau de remplissage (1) selon l'une des revendications 1 à 6, **caractérisé en ce que** l'unité d'antenne (6) comporte au moins un deuxième élément rayonnant (11b), de préférence une deuxième surface d'antenne plane (11b), pour émettre un deuxième signal électromagnétique, dans lequel les premier et deuxième éléments rayonnants (11a, 11b) ne sont pas disposés dans un plan, de sorte que les premier et deuxième éléments rayonnants sont à des distances différentes du fluide pendant le fonctionnement.

8. Commutateur de niveau de remplissage (1) selon la revendication 7, **caractérisé en ce que** le deuxième élément rayonnant (11b) est disposé parallèlement au premier élément rayonnant (11a) de sorte que les deux éléments rayonnants sont disposés l'un derrière l'autre lorsqu'ils sont observés du côté du fluide.

9. Commutateur de niveau de remplissage (1) selon l'une des revendications 7 ou 8, **caractérisé en ce que** le deuxième élément rayonnant (11b) est disposé entre la fenêtre de processus (7) et la surface de référence (13) .

10. Commutateur de niveau de remplissage (1) selon l'une des revendications 7 à 9, **caractérisé en ce que** le premier élément rayonnant (11a) et le deuxième élément rayonnant (11b) présentent des dimensions et/ou des formes différentes.

11. Commutateur de niveau de remplissage (1) selon l'une des revendications 1 à 10, **caractérisé en ce que** l'ouverture (16) de la surface de référence (13) est en forme de fente ou d'haltère ou en forme de T.

12. Commutateur de niveau de remplissage (1) selon l'une des revendications 7 à 11, **caractérisé en ce que** l'unité d'antenne (6) est conçue de manière à ce que le premier élément rayonnant (11a) et le deuxième élément rayonnant (11b) soient tous deux alimentés par le couplage par ouverture.

13. Procédé (2) destiné à déterminer un niveau limite d'un fluide (3) dans un récipient (4), doté d'un commutateur de niveau de remplissage (1) comportant au moins une unité à capteur (5), dans lequel l'unité à capteur (5) comporte au moins une unité d'antenne (6), au moins une fenêtre de processus (7) pour protéger l'unité à capteur (5) et pour le raccordement à la paroi du récipient (8), au moins une unité électronique (9) et au moins un boîtier de capteur (10), dans lequel l'unité d'antenne (6) comporte au moins un premier élément rayonnant (11a) pour émettre un premier signal d'émission électromagnétique, au moins une ligne d'alimentation (12) et au moins une surface de référence (13) présentant un potentiel de référence, et au moins une couche diélectrique (14), dans lequel la couche diélectrique (14) est disposée entre la surface de référence (13) et le premier élément rayonnant (11a),
**caractérisé en ce que** l'unité d'antenne (6) est conçue de manière à ce que le premier élément rayonnant (11a) soit alimenté pendant le fonctionnement par la ligne d'alimentation (12) par l'intermédiaire d'un couplage par ouverture, dans lequel la surface de référence (13) comporte au moins une ouverture (16) en tant que passage pour le signal électromagnétique, et dans lequel le premier élément rayonnant (11a) est disposé de manière à ce qu'il soit en contact direct avec le fluide (3) pendant le fonctionnement, et **en ce que** le procédé (2) comprend les étapes suivantes :
- la génération et l'alimentation (17) d'un signal électromagnétique par l'intermédiaire du couplage par ouverture dans le premier élément rayonnant (11a),
- l'émission (18) d'un premier signal d'émission électromagnétique directement dans le récipient et la mesure de la puissance réfléchie au niveau du premier élément rayonnant (11a),
- l'évaluation (19) de la puissance mesurée à une fréquence ou dans un intervalle de fréquence.

14. Procédé (2) selon la revendication 13, **caractérisé en ce que** le commutateur de niveau de remplissage (1) est conçu selon l'une des revendications 1 à 12.

15. Procédé (2) selon l'une des revendications 13 ou 14, **caractérisé en ce qu'**il est prévu au moins un deuxième élément rayonnant (11b) qui est alimenté par l'intermédiaire du couplage par ouverture, dans lequel les premier et deuxième éléments rayonnants se trouvent à une distance différente du fluide, dans lequel le signal électromagnétique est généré lors d'une première étape (21) et est injecté dans les deux éléments rayonnants (11a, 11b) par l'intermédiaire du couplage par ouverture, dans lequel le premier élément rayonnant (11a) émet un premier signal d'émission électromagnétique à une première fréquence directement dans le récipient et le deuxième élément rayonnant (11b) émet simultanément un deuxième signal d'émission électromagnétique à une seconde fréquence dans le récipient (4), dans lequel les puissances réfléchies au niveau du premier élément rayonnant (11a) et du deuxième élément rayonnant (11b) sont mesurées et dans lequel les puissances mesurées sont ensuite évaluées à deux fréquences définies ou dans un intervalle de fréquences.
